(19) **Europäisches Patentamt**
European Patent Office
Office européen des brevets

(11) **EP 1 274 968 B1**

(12) **EUROPÄISCHE PATENTSCHRIFT**

(45) Veröffentlichungstag und Bekanntmachung des Hinweises auf die Patenterteilung:
**21.11.2007 Patentblatt 2007/47**

(21) Anmeldenummer: **01923520.9**

(22) Anmeldetag: **17.03.2001**

(51) Int Cl.:
**_G01C 19/56_** _(2006.01)_

(86) Internationale Anmeldenummer:
**PCT/DE2001/001032**

(87) Internationale Veröffentlichungsnummer:
**WO 2001/077619 (18.10.2001 Gazette 2001/42)**

(54) **SENSORUNABHÄNGIGE SCHWINGUNGSAMPLITUDENREGELUNG**

SENSOR-INDEPENDENT OSCILLATION AMPLITUDE CONTROL

REGULATION DE L'AMPLITUDE D'OSCILLATION INDEPENDANTE DU CAPTEUR

(84) Benannte Vertragsstaaten:
**DE FR GB IT**

(30) Priorität: **12.04.2000 DE 10018226**

(43) Veröffentlichungstag der Anmeldung:
**15.01.2003 Patentblatt 2003/03**

(73) Patentinhaber: **ROBERT BOSCH GMBH**
**70442 Stuttgart (DE)**

(72) Erfinder:
• **MOHAUPT, Jens**
**72124 Pliezhausen (DE)**
• **ARTZNER, Johannes**
**72764 Reutlingen (DE)**
• **BAUER, Wolfram**
**72074 Tuebingen (DE)**

(56) Entgegenhaltungen:
**WO-A-99/19734**      **US-A- 5 511 419**
**US-A- 5 635 640**

EP 1 274 968 B1

**Beschreibung**

Stand der Technik

Die Erfindung geht aus von einer Vorrichtung zur Erzeugung einer elektrischen Spannung nach der Gattung des Hauptanspruchs.

Ein bekannter in Mikrosystemtechnik hergestellter Drehratensensor weist eine Schwingmasse auf, die um ihre Drehachse oszilliert. Die Schwingmasse ist mit einer Kammstruktur versehen bzw. wird durch eine Kammstruktur gebildet, die bei ihrer Oszillation abwechselnd in eine erste ortsfeste Kammstruktur und in eine zweite ortsfeste Kammstruktur des Sensors eintaucht. Durch diese Anordnung werden zwei Kondensatoren gebildet, deren Kapazität sich zeitlich gegensinnig ändert. Erfährt der Drehratensensor senkrecht zur Drehschwingungsachse der Schwingmasse eine Drehrate, so bewegt sich eine Seite der Schwingmasse auf das Substrat des Drehratensensors zu und die andere Seite von ihm weg. Diese Abstandsänderungen werden von elektrisch leitfähigen Flächen unter der Schwingmasse kapazitiv gemessen. Die bezüglich des Sensors ortsfesten Kammstrukturen und die an der Schwingmasse vorgesehene Kammstruktur werden derart mit einer elektrischen Wechselspannung beaufschlagt, daß die Schwingmasse in Schwingungen versetzt wird.

Ein derartiger Drehratensensor wird z.B. im Dokument WO 99/19734 A beschrieben.

Um einen hohen Signal-/Rauschabstand des die Drehrate wiedergebenden Meßsignals zu erhalten, ist es notwendig, die Auslenkung der beweglichen Struktur des Sensors zu maximieren.

Bei einem bekannten kapazitiven mikromechanischen Sensor, wie insbesondere einem durch Silizium-Planarprozesse hergestellten Drehratensensor, hängt die Kapazitätsänderung nicht nur von der Auslenkung der beweglichen Struktur, sondern auch vom sogenannten Gapabstand ab. Unter Gapabstand wird der mittlere Abstand zwischen den "Zinken" der beweglichen Kammstruktur und den beiden ortsfesten Kammstrukturen bei einer ruhenden Schwingmasse verstanden. Da der Gapabstand fertigungstechnisch bedingt von Sensor zu Sensor schwanken kann, muß jeder Sensor einzeln zur Erreichung einer maximalen Auslenkung bzw. maximalen Schwingungsamplitude der beweglichen Struktur abgeglichen werden. Dies ist nicht nur aufwendig, sondern kann auch zu einem Anschlagen der beweglichen Struktur an die feststehende Struktur führen; hierbei kann der Sensor beschädigt werden.

Vorteile der Erfindung

Die erfindungsgemäße Vorrichtung mit den kennzeichnenden Merkmalen des Hauptanspruchs hat demgegenüber insbesondere den Vorteil, daß diese unabhängig von Fertigungsschwankungen stets automatisch eine vorbestimmte Auslenkung der oszillierenden Schwingmasse eines kapazitiven oder induktiven Sensors einstellt. Ein manueller Einzelabgleich jedes Sensors zur Einstellung einer weitgehend maximalen Auslenkung der Schwingmasse, um einen maximalen Signal-/Rauschabstand zu erhalten, entfällt. Hierdurch lassen sich kapazitive bzw. induktive Sensoren, wie insbesondere Drehratensensoren, kostengünstiger herstellen.

Zeichnungen

Die Erfindung wird nachfolgend am Beispiel eines bekannten in Mikrosystemtechnik hergestellten kapazitiven Drehratensensors anhand von Zeichnungen näher erläutert, wobei gleiche Bezugszeichen gleiche oder gleichwirkende Teile bezeichnen. Es zeigen:

Fig. 1    den ersten Teil eines Prinzip-Schaltbilds einer ersten Ausführungsform einer erfindungsgemäßen sensorunabhängigen Schwingungsamplitudenregelung;

Fig. 2    den zweiten Teil des Prinzip-Schaltbilds der ersten Ausführungsform einer erfindungsgemäßen sensorunabhängigen Schwingungsamplitudenregelung;

Fig. 3    den ersten Teil eines Prinzip-Schaltbilds einer zweiten Ausführungsform einer erfindungsgemäßen sensorunabhängigen Schwingungsamplitudenregelung;

Fig. 4    den zweiten Teil des Prinzip-Schaltbilds der zweiten Ausführungsform einer erfindungsgemäßen sensorunabhängigen Schwingungsamplitudenregelung.

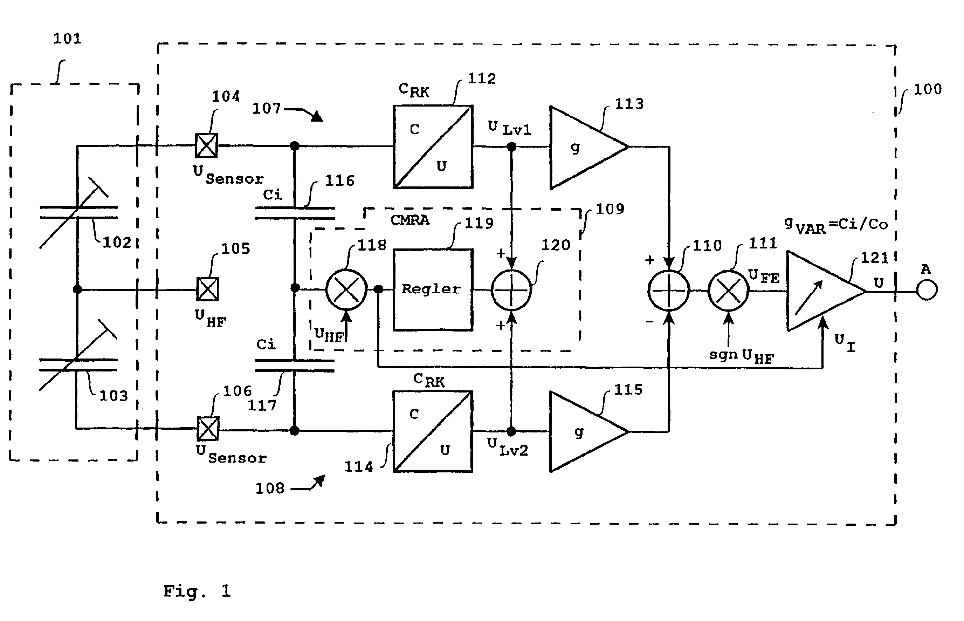

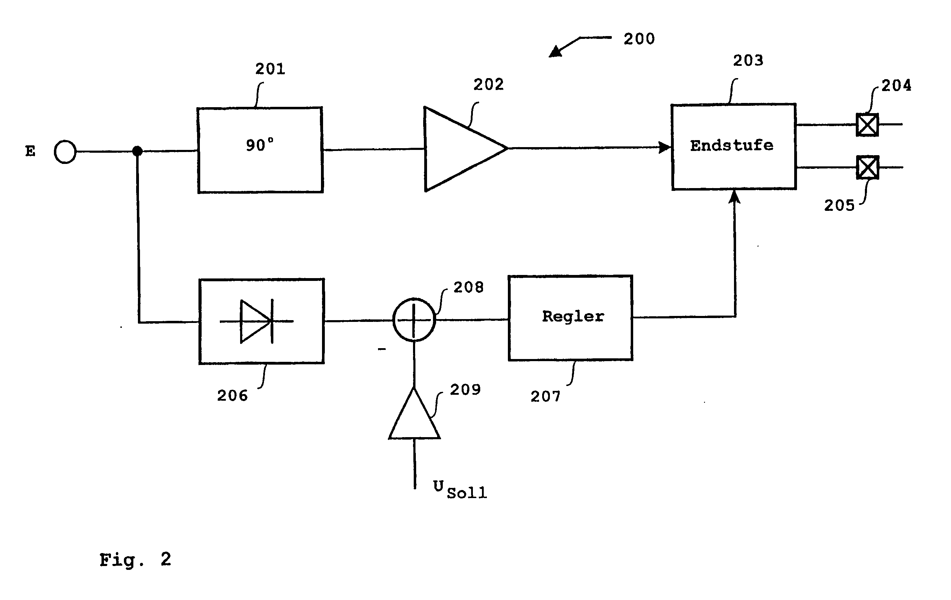

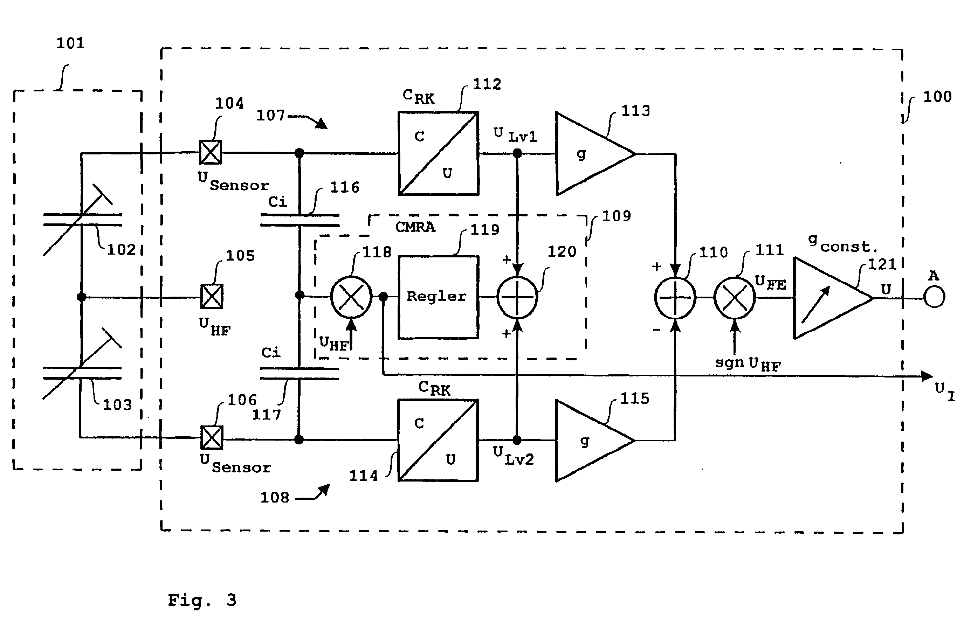

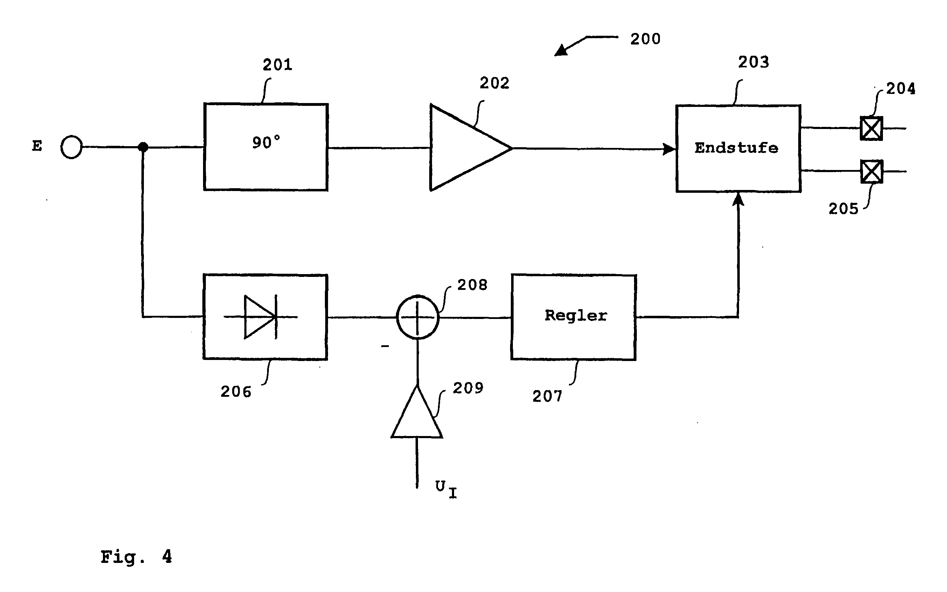

Der Übersichtlichkeit halber ist das Prinzip-Schaltbild einer erfindungsgemäßen sensorunabhängigen Schwingungsamplitudenregelung auf die Figuren 1 und 2 sowie 3 und 4 aufgeteilt worden. Ein mit A in Fig. 1 bzw. 3 gekennzeichneter Ausgang eines ersten Teils des Prinzip-Schaltbilds ist mit einem mit E in Fig. 2 bzw. 4 gekennzeichneten Eingang eines zweiten Teils des Prinzip-Schaltbilds elektrisch verbunden.

Der in Fig. 1 dargestellte erste Teil 100 des Prinzip-Schaltbilds der ersten Ausführungsform der erfindungsgemäßen Schwingungsamplitudenregelung zeigt links ein Schaltbild 101 einer weiteren Kammstruktur-Anordnung mit einer mit der Schwingmasse beweglichen Kammstruktur und zwei ortsfesten Kammstrukturen der vorstehend beschriebenen Art. Diese weiteren Kammstrukturen dienen der Sensierung der Auslenkung der Schwingmasse. Das Schaltbild 101 zeigt zwei Kondensatoren 102 und 103, die durch die zwei bezüglich des Sensors ortsfesten bzw. feststehenden und der Sensierung der Auslenkung dienenden Kammstrukturen und die zwischen diesen oszillierende bzw. bewegliche Kammstruktur gebildet sind.

Ferner zeigt der erste Teil 100 des Prinzip-Schaltbilds einen ersten Signalpfad 107, einen zweiten Signalpfad 108, einen Addierer 110, einen Demodulator 111, einen Verstärker 121 und eine Gleichtakt-Regeleinrichtung 109.

Der erste Signalpfad 107 besteht aus einem Anschluß 104, einem C/U-Wandler 112 und einem Verstärker 113. Der Anschluß 104 steht mit dem Eingang des C/U-Wandlers 112, dessen Ausgang mit dem Eingang des Verstärkers 113 und der Ausgang des Verstärkers 113 mit einem ersten Eingang des Addierers 110 in Verbindung. Der zweite Signalpfad 108 besteht in identischer Weise aus einem Anschluß 106, einem C/U-Wandler 114 und einem Verstärker 115. Der Anschluß 106 steht mit dem Eingang des C/U-Wandlers 114, dessen Ausgang mit dem Eingang des Verstärkers 115 und der Ausgang des Verstärkers 115 mit einem zweiten Eingang des Addierers 110 in Verbindung. Der Ausgang des Addierers 110 ist mit einem ersten Eingang des Demodulators 111 und dessen Ausgang ist mit dem ersten Eingang des Verstärkers 121 verbunden.

Die C/U-Wandler 112 und 114 sind vorzugsweise als invertierende Verstärker beschaltete Operationsverstärker mit einer chipinternen Kapazität $C_{RK}$ in der Rückkopplung; es handelt sich um Ladungsverstärker.

Die Gleichtakt-Regeleinrichtung 109 (CMRA) besteht aus einem Addierer 120, einem Regler 119, vorzugsweise ein I-Regler, einem Modulator 118, einem Kondensator 116 mit einer Kapazität $C_I$ und einem Kondensator 117, der ebenfalls die Kapazität $C_I$ aufweist. Ein erster Eingang des Addierers 120 ist mit dem Ausgang des C/U-Wandlers 112 bzw. dem Eingang des Verstärkers 113 und ein zweiter Eingang des Addierers 120 ist mit dem Ausgang des C/U-Wandlers 114 bzw. dem Eingang des Verstärkers 115 verbunden. Der einzige Ausgang des Addierers 120 ist mit dem Eingang des Reglers 119 und der Ausgang des Reglers 119 ist sowohl mit dem Eingang des Modulators 118 als auch mit einem Regelanschluß des Verstärkers 121 verbunden. Der Ausgang des Modulators 118 steht sowohl mit einem ersten Anschluß des Kondensators 116 als auch mit einem ersten Anschluß des Kondensators 117 in Verbindung. Der zweite Anschluß des Kondensators 116 ist mit dem Eingang des C/U-Wandlers 112 bzw. dem Anschluß 104 und der zweite Anschluß des Kondensators 117 ist mit dem Eingang des C/U-Wandlers 114 bzw. dem Anschluß 106 verbunden.

Der in Fig. 2 dargestellte zweite Teil des Prinzip-Schaltbilds der ersten Ausführungsform der erfindungsgemäßen Schwingungsamplitudenregelung eines Drehratensensors zeigt den Eingang E, der mit dem in Fig. 1 dargestellten Ausgang A verbunden ist, eine 90°-Phasenverschiebungseinrichtung 201, eine Endstufe 203, einen Anschluß 204, einen Anschluß 205, einen Addierer 208, einen Verstärker 209, einen Gleichrichter 206 und einen Regler 207, wobei der Regler 207 einen Teil einer sogenannten Automatic-Gain-Control (AGC) bildet.

Der Eingang E des in Fig. 2 dargestellten zweiten Teils des Prinzip-Schaltbilds der erfindungsgemäßen Schwingungsamplitudenregelung eines Drehratensensors ist mit dem Eingang der 90°-Phasenverschiebungseinrichtung 201, der Ausgang der 90°-Phasenverschiebungseinrichtung 201 ist mit dem Eingang des Verstärkers 202, der Ausgang des Verstärkers 202 ist mit einem Eingang der Endstufe 203 und jeweils ein Ausgang der Endstufe 203 ist mit dem Anschluß 204 bzw. dem Anschluß 205 verbunden. Der Eingang der 90°-Phasenverschiebungseinrichtung 201 ist ferner mit dem Eingang des Gleichrichters 206, dessen Ausgang ist mit einem ersten Eingang des Addierers 208, dessen Ausgang ist mit dem Eingang des Reglers 207 und der Ausgang des Reglers 207 ist schließlich mit einem weiteren Eingang der Endstufe 203 elektrisch verbunden. Der zweite Eingang des Addierers 208 ist mit dem Ausgang des Verstärkers 209 verbunden.

An dem Eingang des Verstärkers 209 ist eine Sollspannung $U_{Soll}$ angelegt, über die die gewünschte Maximalauslenkung der Schwingmasse für alle Sensoren desselben Typs eingestellt ist.

Nachfolgend wird die Funktion der erfindungsgemäßen Schwingungsamplitudenregelung eines Drehratensensors detailliert beschrieben. Es wird davon ausgegangen, daß die Schwingmasse um ihre Ruhelage oszilliert.

Die zeitabhängige Kapazität (C (t)) des Kondensators 102 bzw. des Kondensators 103 für identische Kondensatoren bzw. Kammstrukturen ist in erster Näherung:

$$C_{102}\ (t)\ =\ n\ *\ \epsilon\ *\ (((l_0\ +\ \delta l\ (t)))\ *\ h)\ /\ d \qquad\qquad (1)$$

$$=\ C_0\ +\ \delta C\ (t)$$

$$C_{103}(t) = n * \epsilon * (((l_0 - \delta l(t))) * h) / d \qquad (2)$$
$$= C_0 - \delta C(t)$$

mit:

$l_0$ : Grundüberlappung der beweglichen Kammstruktur mit der betreffenden feststehenden Kammstruktur;

$\delta l$ : Auslenkung der beweglichen Kammstruktur;

h : Höhe der beweglichen Kammstruktur;

d : Gapabstand der beweglichen Kammstruktur zu der betreffenden feststehenden Kammstruktur, d. h. der (idealerweise jeweils gleiche) Abstand benachbarter "Zinken" bzw. Finger von beweglicher und betreffender feststehender Kammstruktur;

n : Anzahl der überlappenden Finger von beweglicher und betreffender feststehender Kammstruktur;

$\epsilon$ : Dielektrizitätskonstante des Mediums zwischen der beweglichen und der betreffenden feststehenden Kammstruktur, wie insbesondere Luft;

$\delta C$ : zeitabhängige Kapazitätsänderung in Abhängigkeit von der Auslenkung der beweglichen gegenüber der betreffenden feststehenden Kammstruktur;

$C_0$ : Ruhekapazität, d.h. die Kapazität des durch die bewegliche Kammstruktur und die betreffende feststehende Kammstruktur gebildeten Kondensators, wenn die bewegliche Kammstruktur ruht.

Es gilt:

$$\delta C/C_0 = \delta l/l_0 \qquad (3)$$

, d. h. die relative Kapazitätsänderung aufgrund einer Auslenkung der beweglichen Kammstruktur entspricht $\delta l/l_0$. Über den Anschluß 105 wird die bewegliche Kammstruktur von einer Vorrichtung (nicht dargestellt) mit einer elektrischen Wechselspannung $U_{HF}$ der Frequenz $f_{HF}$ beaufschlagt. Die Frequenz $f_{HF}$ der elektrischen Wechselspannung $U_{HF}$ ist deutlich höher als die Arbeitsfrequenz $f_{Sensor}$, die dem Sensor über die Antriebs-Kammstrukturen zugeführt ist. Beispielsweise entspricht die Frequenz $f_{HF}$ der elektrischen Wechselspannung $U_{HF}$ ca. dem 16-fachen der Arbeitsfrequenz $f_{Sensor}$, wobei die Arbeitsfrequenz $f_{Sensor}$ beispielsweise ca. 1,5 kHz betragen kann. Es versteht sich, daß diese Angaben lediglich Beispiele für einen ganz konkreten Sensor sind.

An den Anschlüssen 104 und 106 liegt eine elektrische Wechselspannung an, die eine Frequenz $f_{HF}$ aufweist, wobei die Frequenz $f_{HF}$ mit der Arbeitsfrequenz des Sensors $f_{Sensor}$ amplitudenmoduliert ist.

Die zeitabhängige Kapazität des ersten Kondensators 102 wird von dem C/U-Wandler 112 in eine entsprechende elektrische Spannung umgewandelt, von dem Verstärker 113 verstärkt und dem Addierer 110 zugeführt. Die gegenüber der Kapazität des ersten Kondensators gegensinnig zeitabhängige Kapazität des zweiten Kondensators 103 wird von dem C/U-Wandler 114 in eine entsprechende elektrische Spannung umgewandelt, von dem Verstärker 115 verstärkt und ebenfalls dem Addierer 110 zugeführt.

Die von dem Addierer 110 abgegebene elektrische Wechselspannung wird dem Demodulator 111 zugeführt. Der Demodulator 111 demoduliert bzw. multipliziert die von dem Addierer 110 abgegebene elektrische Wechselspannung mit dem Vorzeichen (Signum) der elektrischen Wechselspannung $U_{HF}$.

Da der Addierer 110 die Differenz der in dem ersten Signalpfad 107 und dem zweiten Signalpfad 108 vorliegenden und durch die Verstärker 113 und 115 mit dem Verstärkungsfaktor g verstärkten elektrischen Signale bildet, ist die von dem Demodulator 111 an seinem Ausgang abgegebene elektrische Wechselspannung:

$$U_{FE} = 2 * g * \delta C / C_{RK} * U_{HF} \qquad (4)$$
$$= 2 * g * \delta l / l_0 * C_0 / C_{RK} * U_{HF}$$

mit:

g : Verstärkungsfaktor;

$C_{RK}$ : Rückkoppelkapazität des C/U-Wandlers 112 bzw. des identischen C/U-Wandlers 114;

$U_{HF}$ : elektrische Wechselspannung $U_{HF}$;

$U_{FE}$ : die vom Demodulator 111 nach der Demodulation bzw. Multiplikation mit sgn $U_{HF}$ abgegebene elektrische Wechselspannung,

d. h. durch die von dem Addierer 110 vorgenommene Differenzbildung der elektrischen Signale am Ausgang des ersten Signalpfads 107 und des zweiten Signalpfads 108 wird der durch die Ruhekapazität $C_0$ verursachte Gleichtakt-Anteil bzw. der sogenannte Common-Mode-Anteil eliminiert.

Ein wesentlicher Aspekt der Erfindung besteht nun darin, Maßnahmen vorzusehen, so daß $U_{FE}$ unabhängig von der fertigungstechnisch gewissen Schwankungen unterliegenden Ruhekapazität Codes Sensors ist.

Erfindungsgemäß wird hierzu gemäß einer bevorzugten Ausführungsform der Erfindung sowohl die elektrische Spannung $U_{LV1}$ zwischen dem Ausgang des C/U-Wandlers 112 und dem Verstärker 113 als auch die elektrische Spannung $U_{LV2}$ zwischen dem Ausgang des C/U-Wandlers 114 und dem Verstärker 115 abgegriffen, wobei die elektrische Spannung $L_{LV1}$ dem ersten Eingang des Addierers 120 und die elektrische Spannung $U_{LV2}$ dem zweiten Eingang des Addierers 120 zugeführt wird.

Die von den C/U-Wandlern 112 und 114 an ihrem jeweiligen Ausgang abgegebene elektrische Spannung ist:

$$U_{LV1,LV2} = (C_0 +/- \delta C) / C_{RK} * U_{HF} \qquad (5)$$

Das Ergebnis der von dem Addierer 120 durchgeführten Addition der elektrischen Spannungen ist eine Ausgangsspannung $U_{Add}$ des Addierers 120 für die gilt:

$$U_{Add} = f \ ((C_0 + \delta C) + (C_0 - \delta C)) \qquad (6)$$
$$= f \ (C_0)$$

, d. h. die Ausgangsspannung des Addierers 120 ist eine Funktion der Ruhekapazität $C_0$.

Die Ausgangsspannung $U_{Add}$ des Addierers 120 wird dem Regler 119, vorzugsweise ein I-Regler, zugeführt, der eine Ausgangsspannung $U_I$ abgibt, die sowohl einem Eingang des Modulators 118 als auch dem Regelanschluß des Verstärkers 121 zugeführt wird.

Dem Modulator 118 wird ferner die elektrische Wechselspannung $U_{HF}$ zugeführt und das vom Modulator 118 abgegebene Ausgangssignal gelangt an jeweils einen ersten Anschluß der Kondensatoren 116 und 117, die jeweils eine Kapazität $C_I$ aufweisen. Der zweite Anschluß des Kondensators 116 ist mit dem Eingang des C/U-Wandlers 112 im Signalpfad 107 und der zweite Anschluß des Kondensators 117 ist mit dem Eingang des C/U-Wandlers 114 im Signalpfad 108 verbunden.

Über den Regler 119 werden die Kondensatoren 116 und 117 mit einer solchen Spannung beaufschlagt, daß das Ausgangssignal des Addierers 120 eine Amplitude von etwa 0 Volt aufweist, d. h. die Kondensatoren 116 und 117 kompensieren die Ruhekapazität $C_0$ des betreffenden Sensors weitgehend vollständig.

Die Gleichtakt-Regeleinrichtung 109 (CMRA) reagiert daher eingangsseitig nur auf Gleichtakt-Signale, d. h. Gleichspannungs-Signale. Der Ausgang des Reglers 119 verändert im Regelbetrieb seine Spannung solange, bis kein Gleichtakt-Signal mehr am Eingang des Addierers 120 vorhanden ist. Dies ist dann erfüllt, wenn gilt:

$$U_{HF} * C_0 = - U_I * C_I \qquad (7)$$

bzw.

$$U_I = - C_0/C_I * U_{HF} \qquad (8)$$

, d. h. die Spannung $U_I$ ist direkt proportional zur Ruhekapazität $C_0$.

Über die am Verstärker 121 angelegte Spannung $U_I$ nimmt dieser eine von der betreffenden Ruhekapazität abhängige Verstärkung $g_{var}$ der Spannung $U_{FE}$ vor, für die gilt:

$$g_{var} = C_I/C_0 \qquad (9)$$

Hierdurch ergibt sich für die am Ausgang des Verstärkers 121 abgegebene elektrische Spannung U:

$$U = 2 * g * \delta l/l_0 * C_I/C_{RK} * U_{HF} \qquad (10)$$

mit $\delta C/C_0 = \delta l/l_0$ (siehe Gleichung (3))

, d. h. die am Ausgang des Verstärkers 121 bzw. am Ausgang A anliegende Spannung ist unabhängig von der Ruhekapazität $C_0$ des betreffenden, in seiner Schwingungsamplitude zu regelnden Sensors. Die Spannung U und damit die Wegänderung $\delta l$ des beweglichen Sensorelements ist nur noch von der durch die Regelungs- und/oder Meßelektronik bestimmten toleranzarmen Spannung $U_{HF}$ und der Grundüberlappung $l_0$ abhängig. Die Grundüberlappung $l_0$ läßt sich jedoch insbesondere bei einem aus Halbleiterschichten im Rahmen von Silizium-Flanarprozessen hergestellten mikromechanischen Sensor sehr exakt einstellen.

Die vom Verstärker 121 abgegebene Spannung U wird der 90°-Phasenverschiebungseinrichtung 201 zugeführt, die die um 90° phasenverschobene Spannung U dem Eingang des Verstärkers 202 und die verstärkte phasenverschobene Spannung U einem Eingang der Endstufe 203 zuführt.

Ferner wird die vom Verstärker 121 abgegebene Spannung U am Eingang E bzw. am Eingang der 90°-Phasenverschiebungseinrichtung dem Eingang des Gleichrichters 206 zugeführt. Von der vom Gleichrichter 206 gleichgerichteten Spannung U wird durch den Addierer 208 die durch den Verstärker 209 verstärkte Sollspannung $U_{Soll}$ subtrahiert und das Ausgangssignal des Addierers 208 auf den Eingang des Reglers 207 geführt. Der Regler 207 verändert die Spannung an seinem Ausgang solange, bis seine Eingangsspannung weitgehend Null ist. Der Regler 207, vorzugsweise ein PI-Regler bzw. ein Automatic-Gain-Control-Regler (AGC), steuert die Endstufe 203 derart an, daß die Endstufe eine solche Spannung an die Antriebs-Kammstrukturen des Sensors (nicht dargestellt) über die Anschlüsse 204 und 205 abgibt, daß die Schwingungsamplitude des oszillierenden Sensorelements bzw. der oszillierenden Schwingmasse konstant und weitgehend maximal ist.

Die in den Figuren 3 und 4 dargestellte zweite Ausführungsform der erfindungsgemäßen Schwingungsamplitudenregelung unterscheidet sich von der in den Figuren 1 und 2 dargestellten ersten Ausführungsform darin, daß anstelle der Sollspannung $U_{Soll}$ die am Ausgang des Reglers 119 abgegebene Spannung $U_I$ am zweiten Eingang des Addierers 208 angelegt ist; ferner wird die Spannung $U_I$ bei der zweiten Ausführungsform nicht am Verstärker 121 angelegt, so daß dieser eine konstante Verstärkung $g_{const.}$ vornimmt. Damit gilt für die Ausgangsspannung des Verstärkers 121:

$$U = 2 * g * \delta l/l_0 * C_0/C_{RK} * U_{HF} * g_{const.} \qquad (11)$$

Der Regler bzw. AGC-Regler 207 ändert seine Ausgangsspannung solange, bis die Ausgangsspannung C des Verstärkers 121 der AGC-Fünrungsgröße $U_I$ (oder einer dazu proportionalen Große) entspricht. Hieraus ergibt sich ebenfalls, wie bei der ersten Ausführungsform, daß die Schwingungsamplitude des oszillierenden Sensorelements bzw. der oszillierenden Schwingmasse unabhängig von der Fertigungsschwankungen unterliegenden Ruhekapazität $C_0$ ist.

Ferticungstoleranzen des Gapabstands durch Überätzungen haben nun keinen Einfluß mehr auf die Auslenkung und damit die Geschwindigkeit des beweglichen Sensorelements. Ein aufwendiger und damit kostspieliger Abgleich jedes fertiggestellten Sensors zur Einstellung der gewünschten Auslenkung ist bei Verwendung der erfindungsgemäßen sensorunabhängigen Schwingungsamplitudenregelung nicht mehr notwendig.

Wie vorstehend beschrieben, regelt die erfindungsgemäße sensorunabhängige Schwingungsamplitudenregelung die Schwingungsamplitude der Schwingmasse eines kapazitiven Sensors, wie insbesondere eines Drehratensensors. Es versteht sich, daß die beschriebene Schwingungsamplitudenregelung in modifizierter Form auch zur Regelung der Schwingungsamplitude der Schwingmasse eines induktiven Sensors, wie insbesondere eines solchen Drehratensensors, verwendet werden kann. Eine solche modifizierte Form der erfindungsgemäßen Schwingungsamplitudenregelung wird insbesondere berücksichtigen, daß bei einem induktiven Sensor anstelle von Kapazitäten Induktivitäten vorhanden sind, die Fertigungsschwankungen unterliegen.

Bezugszeichenliste:

| | |
|---|---|
| 100 | erster Teil des Prinzip-Schaltbilds der erfindungsgemäßen Schwingungsamplitudenregelung |
| 101 | Schaltbild der Kammstrukturen eines kapazitiven Drehratensensors zur Sensierung der Auslenkung von dessen Schwingmasse |
| 102 | Kondensator |
| 103 | Kondensator |
| 104 | Anschluß |
| 105 | Anschluß |
| 106 | Anschluß |
| 107 | erster Signalpfad |
| 108 | zweiter Signalpfad |
| 109 | Gleichtakt-Regeleinrichtung (CMRA) |
| 110 | Addierer |
| 111 | Demodulator |
| 112 | C/U-Wandler |
| 113 | Verstärker |
| 114 | C/U-Wandler |
| 115 | Verstärker |
| 116 | Kondensator |
| 117 | Kondensator |
| 118 | Modulator |

119     Regler

120     Addierer

121     Verstärker

200     zweiter Teil des Prinzip-Schaitbilds der erfindungsgemäßen Schwingungsamplitudenregelung
201     90°-Phasenverschiebungseinrichtung
202     Verstärker
203     Endstufe
204     Anschluß
205     Anschluß
206     Gleichrichter
207     Regler
208     Addierer
209     Verstärker


**Patentansprüche**

1.  Vorrichtung (100; 200) zur Erzeugung einer elektrischen Spannung mittels der ein zu Schwingungen fähiger Körper eines kapazitiven und/oder induktiven Sensors, wie insbesondere ein kapazitiver mikromechanischer Drehratensensor, in Schwingungen versetzt wird,
    **gekennzeichnet durch**
    eine Spannungserzeugungseinrichtung (109), die eine elektrische Spannung ($U_I$) erzeugt, die proportional zur Ruhekapazität ($C_0$) und/oder zur Induktion des Magnetfelds des Sensors ist.

2.  Vorrichtung nach Anspruch 1,
    **dadurch gekennzeichnet,**
    **daß** die Spannungserzeugungseinrichtung (109) einen Teil eines Regelkreises zur Regelung der Schwingungsamplitude des Körpers bildet.

3.  Vorrichtung nach Anspruch 1 oder 2,
    **dadurch gekennzeichnet,**
    **daß** die Spannungserzeugungseinrichtung eine Gleichrakt-Regeleinrichtung (109) ist, die eingangsseitig nur auf Gleichtaktsignale reagiert.

4.  Vorrichtung nach Anspruch 3,
    **dadurch gekennzeichnet,**
    **daß** die Gleichtakt-Regeleinrichtung (109) einen ersten Addierer (120) und einen Regler, vorzugsweise einen I-Regler (119), aufweist und/oder daß der Ausgang des Reglers (119) im Regelbetrieb seine Spannung solange verändert, bis weitgehend kein Gleichtaktsignal mehr am Eingang des Reglers (109) anliegt.

5.  Vorrichtung nach einem der Ansprüche 1 bis 4,
    **dadurch gekennzeichnet,**
    **daß** der Sensor (101) zwei zeitlich gegensinnig in ihrer Kapazität veränderliche Elemente (102, 103) aufweist, wobei beide Elemente teilweise durch den zu Schwingungen fähigen Körper gebildet sind und die Kapazitätsänderung der Elemente (102, 103) separat in einem ersten und in einem zweiten Signalpfad (107,108) erfaßt ist.

6.  Vorrichtung nach Anspruch 4 und 5,
    **dadurch gekennzeichnet,**
    **daß** das Ausgangssignal des Addierers (120) auf den Eingang des Reglers (119) geführt ist, und daß ein erster Eingang des Addierers (120) ein erstes Signal im ersten Signalpfad (107) und ein zweiter Eingang des Addierers (120) ein zweites Signal im zweiten Signalpfad (108) abgreift.

7.  Vorrichtung nach Anspruch 6,
    **dadurch gekennzeichnet,**
    **daß** das Ausgangssignal des Reglers (119) auf den Eingang eines Modulator (118) geführt ist, der das Ausgangssignal mit der Frequenz ($f_{HF}$) derjenigen Spannung ($U_{HF}$) moduliert, mit der die Elemente (102, 103) beaufschlagt sind und/oder daß das Ausgangssignal des Modulators (118) dem ersten Anschluß eines ersten Kondensators (116) mit einer ersten Kapazität ($C_I$) und dem ersten Anschluß eines zweiten Kondensators (117) mit einer zweiten Kapazität ($C_I$) zugeführt ist und/oder daß der zweite Anschluß des ersten Kondensators (116) mit dem ersten Signalpfad (107) und der zweite Anschluß des zweiten Kondensators (117) mit dem zweiten Signalpfad (108) in eine= elektrischen Verbindung steht.

**8.** Vorrichtung nach Anspruch 7,
**dadurch gekennzeichnet,**
**daß** das Ausgangssignal des Reglers (119) auf einen ersten Eingang eines Verstärker (121) geführt ist, der eine an ihm angelegte Spannung ($U_{FE}$) um einen vom jeweiligen Sensor abhängigen Faktor ($C_I/C_0$) verstärkt, der proportional oder gleich dem Quotienten aus der ersten Kapazität ($C_I$) und der Ruhekapazität ($C_0$) ist.

**9.** Vorrichtung nach Anspruch 8
**dadurch gekennzeichnet,**
**daß** das Ausgangssignal des ersten Signal-pfads (107) einem ersten Eingang eines zweiten Addierers (110) und das Ausgangssignal des zweiten Signalpfads (108) einem zweiten Eingang des zweiten Addierers (110) zugeführt ist, wobei das Ausgangssignal des zweiten Addierers (110) von einem Demodulator (111) demoduliert und dem Verstärker (121) zur Verstärkung zugeführt ist.

**10.** Vorrichtung nach Anspruch 9,
**dadurch gekennzeichnet,**
**daß** der Demodulator (111) eine Demodulation mit der Frequenz ($f_{HF}$) derjenigen Spannung ($U_{HF}$) durchführt, mit der die Elemente (102, 103) beaufschlagt sind.

**11.** Vorrichtung nach einem der Ansprüche 8 bis 10,
**dadurch gekennzeichnet,**
**daß** die Ausgangsspannung (U) des Verstärkers (121) konstant gehalten ist.

**12.** Vorrichtung nach einem der Ansprüche 9 bis 10,
**dadurch gekennzeichnet,**
**daß** die Ausgangsspannung (U) des Verstärkers (121) proportional zur Ruhekapazität ($C_0$) des Sensors ist, und daß die elektrische Spannung ($U_I$) die Führungsgröße des Regelkreises zur Regelung der Schwingungsamplitude des zu Schwingungen fähigen Körpers ist.

**Claims**

**1.** Apparatus (100; 200) for generating an electrical voltage which is used to cause an oscillatable body of a capacitive and/or inductive sensor, such as a capacitive micromechanical rate of rotation sensor in particular, to oscillate,
**characterized by**
a voltage generation device (109) which generates an electrical voltage ($U_I$) that is proportional to the quiescent capacitance ($C_0$) and/or to the induction of the magnetic field of the sensor.

**2.** Apparatus according to Claim 1,
**characterized in that**
the voltage generation device (109) forms part of a control loop for controlling the oscillation amplitude of the body.

**3.** Apparatus according to Claim 1 or 2,
**characterized in that**
the voltage generation device is a common-mode control device (109) which reacts only to common-mode signals on the input side.

**4.** Apparatus according to Claim 3,
**characterized in that**
the common-mode control device (109) has a first adder (120) and a controller, preferably an I controller (119), and/or **in that** the output of the controller (119) changes its voltage during control operation until a common-mode signal is no longer largely applied to the input of the controller (119).

**5.** Apparatus according to one of Claims 1 to 4,
**characterized in that**
the sensor (101) has two elements (102, 103) whose capacitance can be varied in an inverse manner over time, the two elements being partially formed by the oscillatable body and the change in the capacitance of the elements (102, 103) being separately detected in a first signal path (107) and in a second signal path (108).

**6.** Apparatus according to Claims 4 and 5,
**characterized in that**
the output signal from the adder (120) is passed to the input of the controller (119), and **in that** a first input of the adder (120) taps off a first signal in the first signal path (107) and a second input of the adder (120) taps off a second signal in the second signal path (108).

**7.** Apparatus according to Claim 6,
**characterized in that**
the output signal from the controller (119) is passed to the input of a modulator (118) which modulates the output signal with the frequency ($f_{HF}$) of that voltage ($U_{HF}$) which is applied to the elements (102, 103), and/or **in that** the output signal from the modulator (118) is supplied to the first connection of a first capacitor (116) having a first capacitance ($C_I$) and to the first connection of a second capacitor (117) having a second capacitance ($C_I$), and/or **in that** the second connection of the first capacitor (116) is electrically connected to the first signal path (107) and the second connection of the second capacitor (117) is electrically connected to the second signal path (108).

**8.** Apparatus according to Claim 7,
**characterized in that**
the output signal from the controller (119) is passed to a first input of an amplifier (121) which amplifies a voltage ($U_{FE}$) which is applied to it by a factor ($C_I/C_0$) which depends on the respective sensor and is proportional or equal to the quotient of the first capacitance ($C_I$) and the quiescent capacitance ($C_0$).

**9.** Apparatus according to Claim 8,
**characterized in that**
the output signal from the first signal path (107) is supplied to a first input of a second adder (110) and the output signal from the second signal path (108) is supplied to a second input of the second adder (110), the output signal from the second adder (110) being demodulated by a demodulator (111) and being supplied to the amplifier (121) for amplification.

**10.** Apparatus according to Claim 9,
**characterized in that**
the demodulator (111) demodulates with the frequency ($f_{HF}$) of that voltage ($U_{HF}$) which is applied to the elements (102, 103).

**11.** Apparatus according to one of Claims 8 to 10,
**characterized in that**
the output voltage (U) of the amplifier (121) is kept constant.

**12.** Apparatus according to either of claims 9 and 10,
**characterized in that**
the output voltage (U) of the amplifier (121) is proportional to the quiescent capacitance ($C_0$) of the sensor, and **in that** the electrical voltage ($U_I$) is the reference variable of the control loop for controlling the oscillation amplitude of the oscillatable body.

**Revendications**

**1.** Dispositif (100 ; 200) pour produire une tension électrique mettant en oscillation un corps capable d'osciller d'un capteur capacitif et/ou inductif, comme en particulier un capteur de vitesse de rotation micro-mécanique capacitif,
**caractérisé par**
un dispositif générateur de tension (109) qui produit une tension électrique ($U_I$) proportionnelle à la capacité de repos ($C_o$) et/ou à l'induction du champ magnétique du capteur.

**2.** Dispositif selon la revendication 1,
**caractérisé en ce que**
le dispositif générateur de tension (109) constitue une partie d'un circuit de régulation pour réguler l'amplitude d'oscillation du corps.

**3.** Dispositif selon la revendication 1 ou la revendication 2,
**caractérisé en ce que**
le dispositif générateur de tension est un dispositif de régulation en mode commun (109) qui réagit, côté entrée, uniquement à des signaux à mode commun.

**4.** Dispositif selon la revendication 3,
**caractérisé en ce que**
le dispositif de régulation en mode commun (109) présente un premier additionneur (120) et un régulateur, de préférence un régulateur I (119), et/ou la sortie du régulateur (119) modifie sa tension en mode de régulation, jusqu'à ce qu'il n'y ait plus, en grande partie, de signal à mode commun sur l'entrée du régulateur (109).

**5.** Dispositif selon l'une quelconque des revendications 1 à 4,
**caractérisé en ce que**
le capteur (101) présente deux éléments (102, 103) de capacité en sens inverse variable dans le temps, les deux éléments sont constitués en partie par le corps capable d'osciller et que la modification de la capacité des éléments (102, 103) est détectée séparément sur un premier et sur un deuxième chemin du signal (107, 108).

**6.** Dispositif selon les revendications 4 et 5,
**caractérisé en ce que**
le signal de sortie de l'additionneur (120) passe sur l'entrée du régulateur (119), une première entrée de l'additionneur (120) capte un premier signal sur le premier chemin du signal (107) et une deuxième entrée de l'additionneur (120) capte un deuxième signal sur le deuxième chemin du signal (108).

**7.** Dispositif selon la revendication 6,
**caractérisé en ce que**
le signal de sortie du régulateur (119) passe sur l'entrée d'un modulateur (118) qui module le signal de sortie avec la fréquence ($f_{HF}$) de la tension ($U_{HF}$) appliquée aux éléments (102, 103), et/ou le signal de sortie du modulateur (118) est acheminé vers le premier branchement d'un premier condensateur (116) ayant une première capacité ($C_I$) et vers le premier branchement d'un deuxième condensateur (117) ayant une deuxième capacité ($C_I$), et/ou le deuxième branchement du premier condensateur (116) est relié électriquement au premier chemin du signal (107) et le deuxième branchement du deuxième condensateur (117) est relié électriquement au deuxième chemin du signal (108).

**8.** Dispositif selon la revendication 7,
**caractérisé en ce que**
le signal de sortie du régulateur (119) passe par une première entrée d'un amplificateur (121) qui amplifie une tension ($U_{FE}$) qui lui est appliquée, d'un facteur ($C_I/C_0$) dépendant du capteur respectif, proportionnel ou identique au quotient de la première capacité ($C_I$) et de la capacité de repos ($C_0$).

**9.** Dispositif selon la revendication 8,
**caractérisé en ce que**
le signal de sortie du premier chemin du signal (107) est amené vers une première entrée d'un deuxième additionneur (110) et le signal de sortie du deuxième chemin du signal (108) est amené vers une deuxième entrée du deuxième additionneur (110), et le signal de sortie du deuxième additionneur (110) est démodulé par un démodulateur (111) et amené vers l'amplificateur (121) pour être amplifié.

**10.** Dispositif selon la revendication 9,
**caractérisé en ce que**
le démodulateur (111) réalise une démodulation à la fréquence ($f_{HF}$) de la tension ($U_{HF}$) appliquée aux éléments (102, 103).

**11.** Dispositif selon l'une quelconque des revendications 8 à 10,
**caractérisé en ce que**

la tension de sortie (U) de l'amplificateur (121) est maintenue constante.

12. Dispositif selon l'une quelconque des revendications 9 à 10,
    **caractérisé en ce que**
    la tension de sortie (U) de l'amplificateur (121) est proportionnelle à la capacité de repos ($C_0$) du capteur, et la tension électrique ($U_I$) est la grandeur de guidage du circuit de régulation pour réguler l'amplitude d'oscillation du corps capable d'osciller.

Fig. 1

Fig. 2

EP 1 274 968 B1

Fig. 3

EP 1 274 968 B1

Fig. 4

**EP 1 274 968 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9919734 A